Europäisches Patentamt

European Patent Office

Office européen des brevets

(19)

(11) Publication number: **0 211 668 B1**

# EUROPEAN PATENT SPECIFICATION

(12)

(45) Date of publication of patent specification: **22.05.91**   (51) Int. Cl.⁵: **A47J 27/16**

(21) Application number: **86306126.3**

(22) Date of filing: **07.08.86**

(54) **Continuously Steaming Foodstuffs.**

(30) Priority: **07.08.85 JP 173744/85**

(43) Date of publication of application:
**25.02.87 Bulletin 87/09**

(45) Publication of the grant of the patent:
**22.05.91 Bulletin 91/21**

(84) Designated Contracting States:
**AT BE CH DE FR GB IT LI NL SE**

(56) References cited:
**DE-A- 3 028 280**
**JP-A-50 002 033**
**US-A- 1 357 011**
**US-A- 3 677 171**
**US-A- 3 736 860**

(73) Proprietor: **RHEON AUTOMATIC MACHINERY CO. LTD.**
**2-3, Nozawa-machi**
**Utsunomiya-shi Tochigi-ken(JP)**

(72) Inventor: **Hayashi, Torahiko**
**3-4, Nozawa-machi**
**Utsunomiya-shi Tochigi-ken(JP)**

(74) Representative: **Boyes, Kenneth Aubrey et al**
**Frank B. Dehn & Co. Imperial House 15-19**
**Kingsway**
**London WC2B 6UZ(GB)**

## Description

The present invention relates to an apparatus and method for steaming foodstuffs such as steamed buns, steamed cakes, Chinese buns, and fish paste, and in particular to an apparaus and method for continuously steaming the foodstuffs while controlling the distribution of steam.

There is known from Japanese Patent Publication JP-A-50-2033 a steamer comprising a housing, an inlet, an outlet, three conveyors for feeding in, lifting and feeding out a raw material, and a steam supply device disposed at the lower part of the housing. The raw material is steamed by the steam supply device while travelling upwardly. In the steamer, since the heat energy which the steam bears is converted into condensation heat when the steam contacts a cold raw material and the parts of the steamer, at a position relatively near the lower part of the steamer, the steam can not reach the middle part or the uppermost part of the steamer. Furthermore, liquid resulting from the condensation adversely affects the raw material, if steam is supplied in the steamer in an amount more than necessary, and this leads to inferior products due to wetting.

DE-A-3028280 discloses a steam cooker comprising a housing, a steaming chamber arranged in said housing, an inlet and an outlet for foodstuffs, means adjacent the inlet and outlet for feeding foodstuffs into and out of the housing, means for moving foodstuffs from the inlet to the outlet, first steam supply means arranged in the lower part of said chamber, second steam supply means provided at the uppermost part of the chamber.

According to the invention there is provided apparatus for steaming foodstuffs comprising: a housing, a steaming chamber arranged in said housing, an inlet and an outlet for foodstuffs, means adjacent the inlet and outlet for feeding foodstuffs into and out of the housing, means for moving foodstuffs from the inlet to the outlet, first steam supply means arranged in the lower part of said chamber, second steam supply means provided at the uppermost part of the chamber, characterised in that said steaming chamber is divided by a vertical partition wall into a first steaming chamber and a second steaming chamber, in that third steam supply means is provided in the middle part of said first steaming chamber, and in that said moving means comprises means to move said foodstuffs through said first chamber, means to transfer said foodstuffs from said first chamber to said second chamber and means to move said foodstuffs through said second chamber.

An embodiment of the invention will now be described by way of example with reference to the accompanying drawings, in which: -

Fig. 1 shows a schematic side elevational, partly cross-sectional, view of a first embodiment of the invention; and

Fig. 2 shows a schematic front elevational, partly cross-sectional, view of the embodiment of Fig. 1.

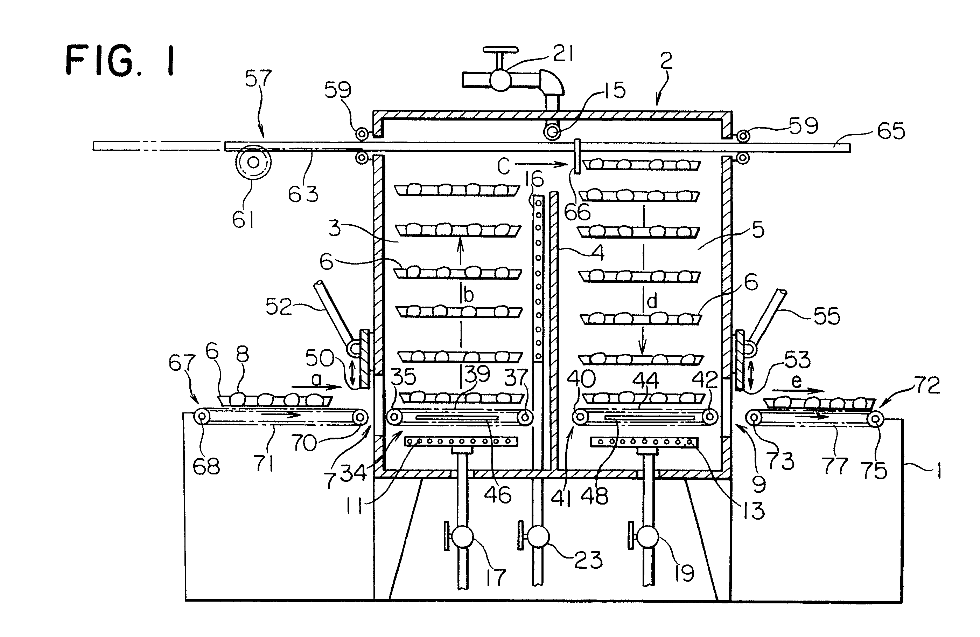

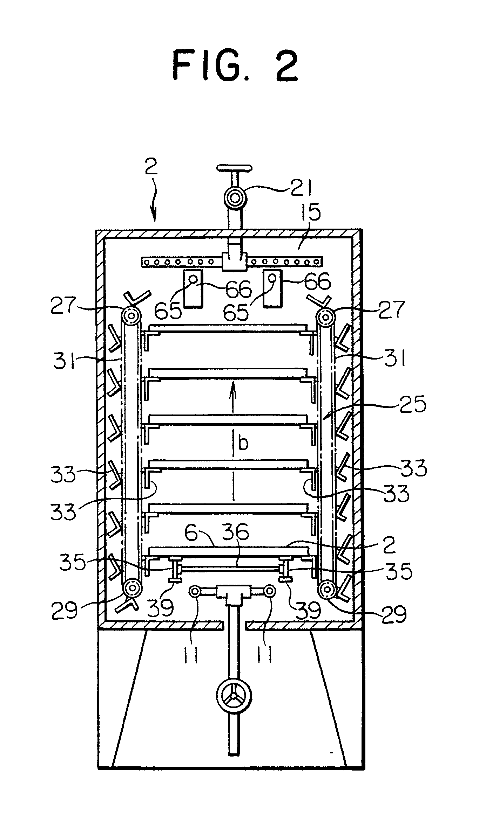

In Figs. 1 and 2, a frame 1 supports a housing 2, a feed-in conveyor 67, and a feed-out conveyor 72. The housing 2 has a tray inlet 7 at a lower part of the front wall thereof, and a tray outlet 9 at a lower part of the rear wall thereof. The interior of the housing 2 is vertically divided into two steaming chambers by a center wall 4, a first steaming chamber 3 adjacent the tray inlet 7 and a second steaming chamber 5 adjacent the tray outlet 9, and contains a continuous tray transporting means comprising a first transfer conveyor 34, vertically travelling conveyors 25, a transfer device 57, and a second tranfer conveyor 41. The aforementioned conveyors 34, 41, 67 and 72 are all chain conveyors. The feed-in conveyor 67 is positioned outside the housing 2 upstream of the first transfer conveyor 34 separated therefrom by the tray inlet 7, and is composed of sprockets 68 and 70 and chains 71. It is intermittently driven by a motor (not shown). The transfer conveyor 34 is positioned within the first steaming chamber 3 near the bottom thereof and is composed of sprockets 35 and 37 and chains 39. It is driven by a motor (not shown) in synchronization with the feed-in conveyor 67. The vertically travelling conveyor 25 consists of two parts, each being composed of sprockets 29 and 27 and chains 31 provided with hooks 33 at regular intervals which function to support trays 6. The two parts of the conveyor 25 are positioned near the two side walls extending parallel to the direction of movement of the conveyor 34, one at each wall. The conveyor 25 is intermittently driven by a motor (not shown) in synchronization with the conveyors 67 and 34. The structure and function of the hooks 33 are described in Japanese Patent Publication JP-A-50-2033. The transfer device 57 is positioned near the ceiling of the housing 2 and is composed of a rod 65 provided at one end thereof with a rack 63 which meshes with a pinion 61 mounted outside the housing 2 with a suitable means. The rod 65 extends through the front and rear walls of the housing 2, and is supported by bearings 59 mounted on both walls. The pinion 61 is rotated by a reversible motor (not shown) to cause the rod 65 to move forward and backwards. A collar 66 is disposed on the rod 65 at a position near the middle thereof, and functions to push the uppermost tray 6. The second transfer conveyor 41 is positioned near the bottom of the second steaming chamber 5 and is composed of sprockets 40 and 42 and chains 44, and is intermittently driven by a motor (not shown) in synchronization with the movement of the trays 6. The feed-out conveyor 72 is positioned outside the housing 2, downstream of the transfer conveyor 41, separated by the tray outlet 9, and is composed of sprockets 73 and 75 and chains 77, and driven by a motor (not shown). The conveyor may be continuously or intermittently driven. When it is intermittently driven, its movement is synchronized with the conveyor 41.

A first group of bottom steam supply ports 11 are disposed at the lower part of the first steaming chamber 3. The ports are formed on horizontal pipes, which are connected to a vertical pipe leading to the source of steam. The amount of steam issuing from the ports is controlled by a valve 17 provided on the vertical pipe. A second group of bottom steam supply ports 13 are disposed at the lower part of the second steaming chamber 5 in a manner similar to the first group of steam supply ports 11. The amount of steam issuing from the ports of the second group is controlled by a valve 19. An upper steam supply port 15 is disposed at the upper part of the housing 2, and the amount of steam issuing therefrom is controlled by a valve 21 provided on a pipe leading to the port 15. Middle steam supply ports 16 are disposed in the first steaming chamber 3 adjacent the center wall 4, which is adapted to supply steam in the middle of the chamber 3. The ports 16 are formed on a vertical pipe connected to an outside steam source. The amount of steam issuing from the ports 16 is controlled by a valve 23 provided on a part of the vertical pipe outside the housing 2. Middle steam supply ports may also be disposed in the chamber 5 in a similar manner.

Baffle plates 46 and 48 are arranged above the ports 11 and 13 for diffusing the steam within the chambers 3 and 5, respectively. They may be positioned in the space formed by the upper and lower flights of the conveyor 34 and 41. Shutters 50 and 53 are arranged on outer walls of the housing 2, and adjacent the tray inlet 7 and the tray outlet 9. The shutter 50 is opened by the operation of a handle 52 when the tray 6 enters in the chamber 3 and is closed at other times. The shutter 53 is opened when the tray 6 leaves the chamber 5 by the operation of a handle 55. The sprockets 35 are connected at the ends of a shaft 36.

The operation of the apparatus of the embodiment of the invention will now be described.

When a tray 6 bearing foodstuffs 8 is to be conveyed by the conveyor 67 into the chamber 3 as indicated by arrow a, the shutter 50 at the tray inlet 7 is opened by the manipulation of the handle 52. Then, the conveyors 67 and 34 are driven so as to send the tray 6 into the first steaming chamber 3. The tray is then lifted by the vertically travelling conveyor 25 as indicated by an arrow b. This lifting is carried out intermittently. While the trays carrying foodstuffs are within the housing 2, they are steamed by the steam issuing from the ports 11, 16 and 15. The tray which has reached the uppermost part of the chamber 3 is then transferred by the collar 66 of the transfer device 57 to the chamber 5 as indicated by arrow c, and is engaged by the vertically travelling conveyor 25, which intermittently lowers the tray 6 downwards as indicated by arrow d, while being steamed by the steam issuing from the ports 15 and 13. The tray 6, which has reached the lowermost part of the chamber 5 is then transferred out of the chamber as indicated by arrow e by the conveyor 41 cooperatively with the feed-out conveyor 72.

The operator can control the steaming of the products by adjusting the valves 17, 21, 23, and 19 in response to the desired quality of the foodstuffs to be steamed.

This selective adjustment of the steam amount can be accomplished by means of a magnetic valve, a control mechanism, and a memory device, as well as by manually turning the valves.

The amount of steam supplied by the various supply ports will depend on the foodstuff to be steamed. For example, with a steamed bun with a relatively thin covering steam is supplied in an amount of 20% from the bottom supply ports, 30% from the middle supply ports, and 50% from the upper supply ports, in the first steaming chamber; 100% to 80% from the upper supply ports and 0% to 20% from the bottom supply ports, in the second steaming chamber.

For a steamed bun with a relatively thick covering steam is supplied in an amount of 10% from the bottom supply ports, 10% from the middle supply ports, and 80% from the upper supply ports in the first steaming chamber; 100% from the upper supply ports, and 0% fom the bottom supply ports, in the second steaming chamber.

Alternatively, in the case of a batter steamed cake, the steam is preferably supplied in an amount of 35% from the bottom supply ports, 35% from the middle supply ports, 30% from the upper supply ports, in the first steaming chamber; 50% from the upper supply ports, and 50% from the bottom supply ports in the second steaming chamber.

Since steam is supplied not only in the lower part, but also in the upper part, and also the middle part of the steaming chamber, at the same time, the amount of steam consumption is one-half the amount of steam which the device in the prior art required.

As will be understood from the above description, various kinds of steamed foodstuffs can be produced in response to the desired requirements for steaming the foodstuffs by the apparatus of the invention, at least in its preferred forms, and products having a uniformly high quality can be mass produced, and further, steam consumption can be considerably lowered.

In particular the present invention is applicable to continuously steaming foodstuffs such as steamed buns, steamed cakes, Chinese cakes, and fish paste, while controlling the steam supply whereby a desired amount of steam can be supplied to a desired position while the foodstuffs are continuously carried on trays through the apparatus. Furthermore the steaming process may be varied so that one apparatus can steam various products in response to the characteristic features of the kind of product to be steamed.

The present invention, in its preferred forms, provides an apparatus for continously steaming while vertically transporting the foodstuffs in a steaming chamber, and which can satisfactorily steam various kinds of steam-processed foods by providing steam supply means at the middle, or even the top of a steaming chamber, as well as at its lower part, and adjusting the amount of steam from each steam supply means.

In other words, the foodstuffs can be steamed without regard to the properties or performance of a boiler, or the conditions of a boiler, such as the distance between the boiler and the steamer, the pipe size, or the requirements of the piping, such as branching, etc.

Furthermore, foodstuffs can be steamed in such a manner that products of uniform quality are always produced.

## Claims

1. Apparatus for steaming foodstuffs comprising: a housing (2), a steaming chamber arranged in said housing, an inlet (7) and an outlet (9) for foodstuffs, means (67,72) adjacent the inlet (7) and outlet (9) for feeding foodstuffs into and out of the housing (2), means (25,57) for moving foodstuffs from the inlet (7) to the outlet (9), first steam supply means (11,13) arranged in the lower part of said chamber, second steam supply means (15) provided at the uppermost part of the chamber, characterised in that said steaming chamber is divided by a vertical partition wall into a first steaming chamber (3) and a second steaming chamber (5), in that third steam supply means (16) is provided in the middle part of said first steaming chamber (3) and in that said moving means comprises means (25) to move said foodstuffs through said first chamber (3), means (57) to transfer said foodstuffs from said first chamber to said second chamber (5) and means to move said foodstuffs through said second chamber (5).

2. Apparatus according to Claim 1 wherein said inlet (7) is provided adjacent the lower part of said first chamber (3) and said outlet (9) is provided adjacent the lower part of said second chamber (5), and said moving means comprises means (25) for raising said foodstuffs from the lower part of said first chamber (3) to an upper part of said first chamber, means (57) for transferring said foodstuffs to an upper part of said second chamber (5), and means (25) for lowering said foodstuffs from said upper part of said second chamber (5) to said lower part of said second chamber (5).

## Revendications

1. Appareil de cuisson d'aliments à la vapeur comportant :
une enceinte (2), une chambre de cuisson à la vapeur disposée dans ladite enceinte, une entrée (7) et une sortie (9) pour aliments, des moyens (67, 72) adjacents à l'entrée (7) et à la sortie (9) pour introduire des aliments dans l'enceinte (2) et les faire sortir de celle-ci, des moyens (25, 57) destinés à déplacer des aliments de l'entrée (7) à la sortie (9), des premiers moyens (11, 13) d'alimentation en vapeur d'eau disposés dans la partie inférieure de ladite chambre, des deuxièmes moyens (15) d'alimentation en vapeur d'eau prévus à la partie la plus haute de la chambre, caractérisé en ce que ladite chambre de cuisson à la vapeur est divisée par une cloison verticale en une première chambre (3) de cuisson à la vapeur et une seconde chambre (5) de cuisson à la vapeur, en ce que des troisièmes moyens (16) d'alimentation en vapeur d'eau sont prévus dans la partie médiane de ladite première chambre (3) de cuisson à la vapeur et en ce que lesdits moyens de déplacement comprennent les moyens (25) destinés à déplacer lesdits aliments à travers ladite première chambre (3), des moyens (57) destinés à transférer lesdits aliments dans ladite première chambre à ladite seconde chambre (5) et des moyens destinés à déplacer lesdits aliments à travers ladite seconde chambre (5).

2. Appareil selon la revendication 1, dans lequel ladite entrée (7) est prévue à proximité immédiate de la partie inférieure de ladite première chambre (3) et ladite sortie (9) est prévue à proximité immédiate de la partie inférieure de ladite seconde chambre (5) et lesdits moyens de déplacement comprennent des moyens (25) destinés à élever lesdits aliments de la partie inférieure de ladite première chambre (3) jusqu'à une partie supérieure de ladite première chambre, des moyens (57) destinés à transférer lesdits aliments vers une partie supérieure de ladite seconde chambre (5), et des moyens (25) destinés à abaisser lesdits aliments de ladite partie supérieure de ladite seconde chambre (5) jusqu'à ladite partie inférieure de ladite seconde chambre (5).

**Ansprüche**

1. Vorrichtung zum Dämpfen von Nahrungsmitteln, umfassend ein Gehäuse (2), eine in diesem Gehäuse angeordnete Dampfkammer, einen Einlaß (7) und einen Auslaß (9) für Nahrungsmittel, Mittel (67, 72) angrenzend an den Einlaß (7) und den Auslaß (9) zum Zuführen von Nahrungsmitteln in und Herausführen aus dem Gehäuse (2), Mittel (25, 57) zur Beförderung der Nahrungsmittel vom Einlaß (7) zum Auslaß (9), erste, im unteren Teil der Kammer angeordnete Dampfzufuhrmittel (11, 13), zweite, im obersten Teil der Kammer angeordnete Dampfzufuhrmittel (15), dadurch gekennzeichnet, daß die Dampfkammer durch eine vertikale Trennwand in eine erste Dampfkammer (3) und eine zweite Dampfkammer (5) unterteilt ist, daß ein drittes Dampfzufuhrmittel (16) im Mittelteil der ersten Dampfkammer (3) vorgesehen ist und daß die Beförderungsmittel eine Einrichtung (25) zur Beförderung der Nahrungsmittel durch die erste Kammer (3), eine Einrichtung (57) zum Transferieren der Nahrungsmittel von der ersten Kammer in die zweite Kammer (5) und eine Einrichtung zur Beförderung der Nahrungsmittel durch die zweite Kammer (5) umfassen.

2. Vorrichtung nach Anspruch 1, worin der Einlaß (7) im Bereich des unteren Teiles der ersten Kammer (3) und der Auslaß (9) im Bereich des unteren Teiles der zweiten Kammer (5) vorgesehen ist und die Beförderungsmittel eine Einrichtung (25) zum Heben der Nahrungsmittel vom unteren Teil der ersten Kammer (3) zu einem oberen Teil der ersten Kammer, eine Einrichtung (57) zum Transferieren der Nahrungsmittel zu einem oberen Teil der zweiten Kammer (5), und eine Einrichtung (25) zum Senken der Nahrungsmittel vom oberen Teil der zweiten Kammer (5) zum unteren Teil der zweiten Kammer (5) umfassen.

FIG. 1

# FIG. 2